# EUROPÄISCHE PATENTSCHRIFT

(11) **EP 3 933 102 B1**
(45) Veröffentlichungstag und Bekanntmachung des Hinweises auf die Patenterteilung: **12.08.2026**
(21) Anmeldenummer: 20182844.9
(22) Anmeldetag: 29.06.2020
(51) Int. Cl.: D06P 1/22, A01N 43/72, A01N 43/74, A01N 43/84, D06P 1/26, D06P 1/52, D06P 5/20, A41D 13/11

(54) **TEXTILES FLÄCHENGEBILDE, BEKLEIDUNG, VERFAHREN ZUR HERSTELLUNG, FUNKTIONALISIERUNG EINES TEXTILEN FLÄCHENGEBILDES UND VERWENDUNGEN EINES AN EINEM TEXTILEN FLÄCHENGEBILDE GEBUNDENEN PHOTOSENSITIZERS**
TEXTILE FABRIC, CLOTHING, METHOD FOR ITS MANUFACTURING, FUNCTIONALIZATION OF A TEXTILE FABRIC SURFACE AND USE OF A PHOTOSENSITIZER BONDED TO THE SURFACE OF A TEXTILE FABRIC
NAPPE TEXTILE, VÊTEMENT, SON PROCÉDÉ DE FABRICATION, FONCTIONNALISATION D'UNE NAPPE TEXTILE ET L'UTILISATION D'UN PHOTOSENSIBILISATEUR FIXÉ À LA SURFACE D'UNE NAPPE TEXTILE

(43) Veröffentlichungstag der Anmeldung: 05.01.2022
(73) Patentinhaber: Ortner Cleanroom Engineering GmbH, 9500 Villach (AT)
(72) Erfinder: RÖDER, Beate, 14612 Falkensee (DE); ARMBRUSTER, Birgit, 07973 Greiz (DE); KOFLER, Wolfram, 9871 Seeboden (AT); MÜLLER, Alexander, 10627 Berlin (DE)
(74) Vertreter: Dilg, Haeusler, Schindelmann Patentanwaltsgesellschaft mbH

(56) Entgegenhaltungen:
- WO-A1-00/25940
- WO-A1-00/78854
- WO-A1-2007/088392
- WO-A1-2009/071845
- WO-A1-2009/121183
- WO-A1-2010/118180
- WO-A1-2012/085250
- WO-A1-2017/165861
- WO-A1-93/00815
- WO-A1-99/49823
- WO-A2-2007/114843
- WO-A2-2010/096285
- CN-A- 101 781 850
- DEROSA M C ET AL: "Photosensitized singlet oxygen and its applications", COORDINATION CHEMISTRY REVIEWS, ELSEVIER SCIENCE, AMSTERDAM, NL, no. 233-234, 1 January 2002 (2002-01-01), pages 351 - 371, XP002471645, ISSN: 0010-8545

## Beschreibung

### GEBIET DER ERFINDUNG

Die vorliegende Erfindung betrifft ein textiles Flächengebilde (*textile fabric*), daraus gemachte Bekleidung (Textilien), ein Verfahren zur Herstellung bzw. Funktionalisierung eines textiles Flächengebildes und Verwendungen eines an einem textilen Flächengebilde gebundenen Photosensitizers.

### HINTERGRUND

Bekleidung und Textilien bieten aufgrund ihrer hohen inneren Oberfläche und der zumeist guten Feuchtigkeitsaufnahme ein hervorragendes Substrat für mikrobielle Keime. Daher erscheint besonders im medizinischen und technischen Sektor eine antimikrobielle Ausrüstung von Textilien sinnvoll. Zur Zeit werden überwiegend klassische Biozide, wie Triclosan, quartäre Ammoniumverbindungen und Polyhexanid, aber auch Silber-Nanopartikel, Schwermetalle oder Chitosan, zu diesem Zweck verwendet.

Ein auf der photodynamischen Inaktivierung (PDI) basierender Ansatz zur antimikrobiellen Ausrüstung von Textilien bietet eine vielversprechende und umweltfreundliche Möglichkeit, um vor allem die Problematik mikrobieller Resistenzen zu umgehen. Die PDI beruht auf der photosensibilisierten Aktivierung reaktiver Sauerstoffspezies (*reactive oxygen species,* ROS), die direkt oder über die Bildung von Sekundärradikalen Zellbestandteile von Mikroorganismen oxidieren und letztlich zum Zelltod (z.B. durch eine Zerstörung der Proteinhülle) bzw. zu einer Inaktivierung führen können. Der Aktivierungsmechanismus beruht auf der Wirkung von Licht des sichtbaren oder ultravioletten-Spektrums auf einen als Photosensibilisator (PS) wirkenden Farbstoff (auch Photosensitizer genannt). Dieser überträgt seine lichtinduzierte Anregungsenergie auf umliegende Sauerstoffmoleküle, was zur Bildung von hochreaktivem Singulettsauerstoff (¹O₂) führt. Danach geht der PS in seinen Grundzustand über und steht für eine erneute Anregung zur Verfügung. Dabei ist es im Fall von Mikroorganismen unwichtig, ob die Photosensibilisierung aus dem Innern der Zellen, der Zellmembran oder außerhalb der Zelle induziert wird. Hierin liegt die Stärke des Prinzips der PDI: Im Gegensatz zur Wirkungsweise von Antibiotika, die jeweils an ganz spezifische metabolische Prozesse oder Zellbestandteile geknüpft ist, wirkt die PDI über unspezifische Oxidationsprozesse und ist darüber hinaus unabhängig von bereits vorhandenen Resistenzmechanismen.

Bisherige Versuche zur PDI-basierten Textilfunktionalisierung basieren vorwiegend auf kovalenten Kopplungsmechanismen oder eSpin-Verfahren. Beide Strategien haben den Nachteil, dass sie kostenintensiv und teilweise sehr aufwendig sind. So erfordert die kovalente Anbindung in der Regel eine asymmetrische Substitution des PS und eine bindungsspezifische Aktivierung des Substrates. Industriell sind eSpin-Verfahren zwar deutlich universeller umsetzbar, beschränken sich aber wegen ihrer geringen Prozesseffizienz noch überwiegend auf kleine Spezialanwendungen. Ein weiterer Nachteil von eSpin-Verfahren ist, dass der PS vorwiegend im Innern des Substrates und nicht an seiner Oberfläche immobilisiert wird. Wegen der eingeschränkten ¹O₂-Diffusion bleibt somit ein Großteil der PS-Moleküle wirkungslos.

Ein bislang noch nicht gelöstes Problem bei der Funktionalisierung von textilen Materialien mit Photosensitizers liegt insbesondere darin, den Photosensitizer ausreichend fest an das textile Substrat zu binden, um ein Herauswaschen des Farbstoffs beim Waschen des Textils weitestgehend zu vermeiden, ohne dabei dessen antimikrobielle Wirksamkeit zu beeinträchtigen. Insbesondere für Schutzkleidung und Reinraumbekleidung bietet eine waschbeständige PDIbasierte Funktionalisierung eine sowohl ökonomisch als auch ökologisch vorteilhafte Alternative, die zudem in Anwesenheit von Licht kontinuierlich wirksam ist, zu herkömmlichen Einwegschutzanzügen bzw. immer wieder aufwändig zu sterilisierenden Textilien.

Es hat sich zudem leider herausgestellt, dass nach wie vor eine große Gefahr von krankheitserregenden Mikroorganismen einschließlich Viren ausgeht, wie in jüngster Zeit das *severe acute respiratory syndrome coronavirus* 2 (SARS-CoV-2) und die von diesem Virus verursachte Erkrankung Covid-19 zeigen, so dass ein großer Bedarf besteht, textile Materialen effektiv und möglichst dauerhaft (insbesondere langlebig bzw. waschbeständig) mit bioziden bzw. antimikrobiellen Eigenschaften zu versehen, um eine Übertragung von Pathogenen so weit wie möglich zu verhindern und den Träger des Kleidungsstücks vor einer Infektion zu schützen.

In WO 00/25940 A1 wird ein Substrat beschrieben, wie beispielsweise ein gewebtes oder nicht gewebtes Gewebe, das mit einem lichtaktivierten Farbstoff allein oder in Kombination mit zusätzlichen herkömmlichen antimikrobiellen Wirkstoffen gebunden ist. Das Substrat wird mit einem lichtaktivierbaren, nicht auswaschbaren Farbstoff imprägniert, der antimikrobielle und/oder antivirale Eigenschaften aufweist, die auf das Substrat übertragen werden können. Der Farbstoff wird durch ein kationisches oder anionisches Bindemittel wie beispielsweise ein wasserlösliches Polymer oder Carrageen gebunden. Bei Einwirkung von normalem Licht erzeugt der Farbstoff Singulett-Sauerstoff, der Mikroorganismen und Viren abtötet.

WO 93/00815 A1 beschreibt Zusammensetzungen aus einem Polymer und einem Photosensibilisator, die unter dem Einfluss von sichtbarem Licht die Bildung von Singulett-Sauerstoff aus Triplett-Sauerstoff katalysieren können, und photobakterizide Eigenschaften und autosterile Eigenschaften bei Einwirkung von sichtbarem Licht aufweisen. Ein Verfahren zur Sterilisation einer Oberfläche besteht darin, eine Oberfläche, die einen solchen Photosensibilisator enthält, sichtbarem Licht auszusetzen.

WO 2009/121183 A1 beschreibt teine antibiofilmische Zusammensetzung, die zwei oder mehr Wirkstoffe umfasst, ausgewählt aus der Gruppe bestehend aus DispersinBTM, 5-Fluoruracil, Desoxyribonuklease I und Proteinase K, zur Verhinderung des Wachstums und der Vermehrung von in Biofilmen eingebetteten Mikroorganismen in der Wundversorgung, der Mundpflege sowie bei krankheitsbedingten Infektionen und Behandlungsverfahren bei Säugetieren.

### AUFGABEN DER ERFINDUNG

Eine Aufgabe der vorliegenden Erfindung ist es daher, textile Materialien bzw. Flächengebilde (*textile fabric*) sowie daraus herstellte Bekleidung mit einer photodynamischen Inaktivierung zu versehen, die effektiv und möglichst dauerhaft (insbesondere langlebig bzw. waschbeständig) ist und in der Lage sein kann, die Keimzahl auf der Oberfläche signifikant zu verringern (vorzugsweise um mehr als 10⁴ ("log 4")) bzw. Bakterien und Viren gezielt abzutöten bzw. zu inaktivieren, um dadurch nicht nur den Träger der Bekleidung vor einer Infektion zu schützen, sondern auch das Risiko einer Übertragung zu minimieren.

### ZUSAMMENFASSUNG DER ERFINDUNG

Die vorliegende Erfindung betrifft ein textiles Flächengewebe, das ein Gewebe und/oder ein Vlies aufweist, wobei das Gewebe und/oder das Vlies Fasern aufweist, die optional zumindest teilweise eine Beschichtung aufweisen, wobei ein Farbstoff, der durch Aktivierung mit elektromagnetischer Strahlung eine antimikrobielle Wirkung aufweist, an den Fasern bzw. an und/oder in der Beschichtung gebunden ist, dadurch gekennzeichnet, dass der Farbstoff TMPyP ist.

Des Weiteren betrifft die vorliegende Erfindung Bekleidung (Textilie) die ein textiles Flächengebilde, wie es hierin beschrieben ist, aufweist, insbesondere daraus gemacht ist.

Ferner betrifft die vorliegende Erfindung ein Verfahren zur Herstellung bzw. Funktionalisierung eines textilen Flächengebildes bzw. eines Gewebes und/oder Vlieses, das Fasern aufweist, wobei das Verfahren ein optionales zumindest teilweises Beschichten der Fasern, ein Applizieren eines Farbstoffs (Photosensitizers), der durch Aktivierung mit elektromagnetischer Strahlung eine antimikrobielle Wirkung aufweist, auf das textile Flächengebilde und ein Binden des Farbstoffs an den Fasern bzw. an und/oder in der Beschichtung umfasst. Der Farbstoff ist hierbei TMPyP.

Weiterhin betrifft die vorliegende Erfindung ein textiles Flächengebilde, erhältlich (bzw. erhalten) durch ein Verfahren mit den obigen Merkmalen.

Darüber hinaus betrifft die vorliegende Erfindung die Verwendung eines an einem textilen Flächengebilde (bzw. an einem Gewebe und/oder Vlies) gebundenen Photosensitizers, der TMPyP ist, zur Kontrolle von mikrobiellem, insbesondere bakteriellem und/oder viralem, Wachstum bzw. zur Verringerung einer mikrobiellen, insbesondere bakteriellen und/oder viralen, Belastung.

Weitere Aufgaben und Vorteile von Ausführungsformen der vorliegenden Erfindung werden an Hand der folgenden detaillierten Beschreibung und der beigefügten Abbildungen ersichtlich.

### KURZE BESCHREIBUNG DER ABBILDUNGEN

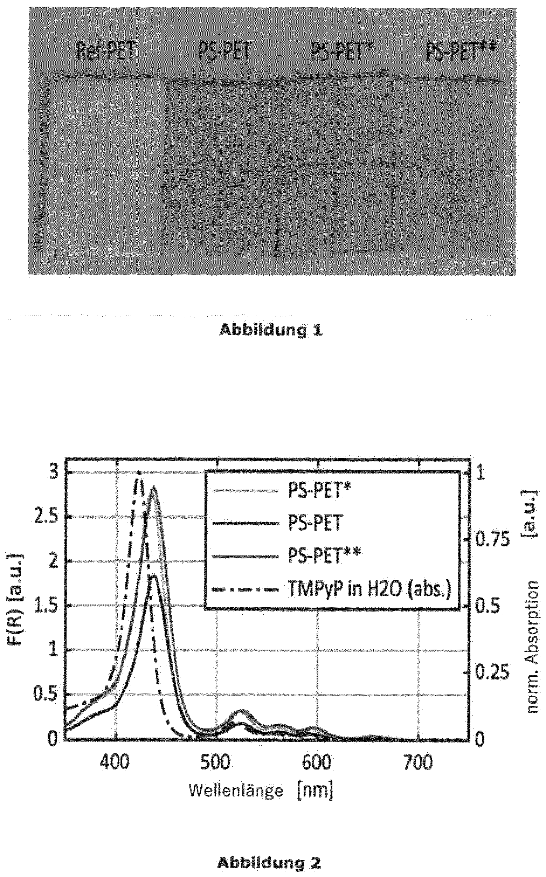

Abbildung 1 zeigt Fotografien von mit einem Farbstoff funktionalisierten textilen Flächengebilden. Dabei sind Proben mit Bindersystem und mit Nachbehandlung (PS PET), ohne Nachbehandlung (PS-PET*), ohne Bindersystem und ohne Nachbehandlung (PS-PET**) sowie als Vergleich ein unbehandeltes Referenz-Substrat (Ref-PET) abgebildet.

Abbildung 2 zeigt aus DRUV-Spektren ermittelte Kubelka-Munk-Funktion der drei in Abbildung 1 abgebildeten Proben. Die Spektren wurden gegen eine Nullprobe gleichen Textilsubstrates aber ohne TMPyP-Funktionalisierung als Standard aufgenommen. Zum Vergleich ist gestrichelt das normierte Absorptionsspektrum von TMPyP in H₂O dargestellt.

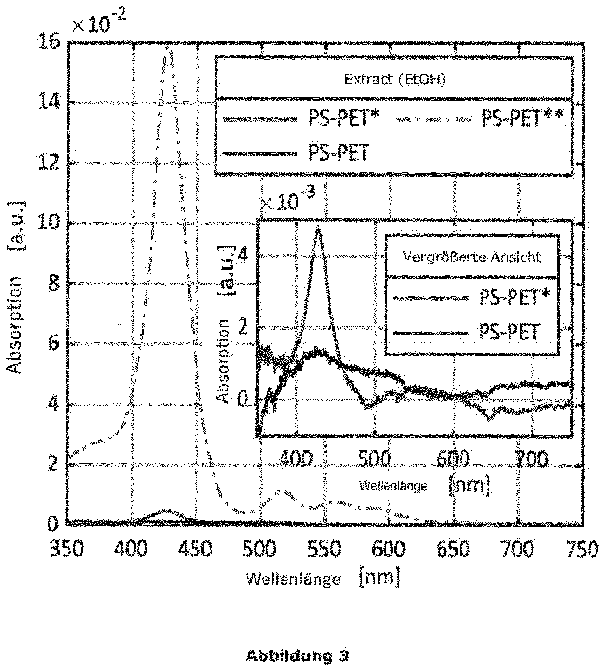

Abbildung 3 zeigt Absorptionsspektren gemessen im EtOH-Extrakt nach 48-stündiger Inkubation (1.6 × 1.6 cm-Gewebe in 6 ml EtOH) der Probe PS-PET im Vergleich zu zwei nicht nachbehandelten Probenvarianten PS-PET* und PS-PET** (Färbung mit und ohne Bindersystem). Für die Proben PS-PET* und PS-PET ist zusätzlich ein vergrößerter Ausschnitt dargestellt.

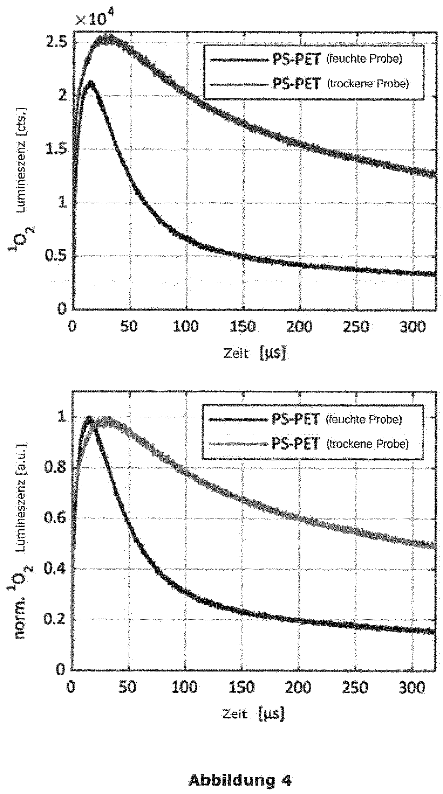

Abbildung 4 veranschaulicht den zeitaufgelöstem ¹O₂-Nachweis auf den funktionalisierten Probenoberflächen in Abhängigkeit der Mikroumgebung (trocken/nass). Es wurden 6 x 6-Pixel-Raster à 1 mm Schrittweite unter einer Quarzglasscheibe gescannt. Die dargestellten Signale wurden über alle 36 Messpixel aufsummiert. Auf der rechten Seite sind die auf das Maximum normierten Signale dargestellt.

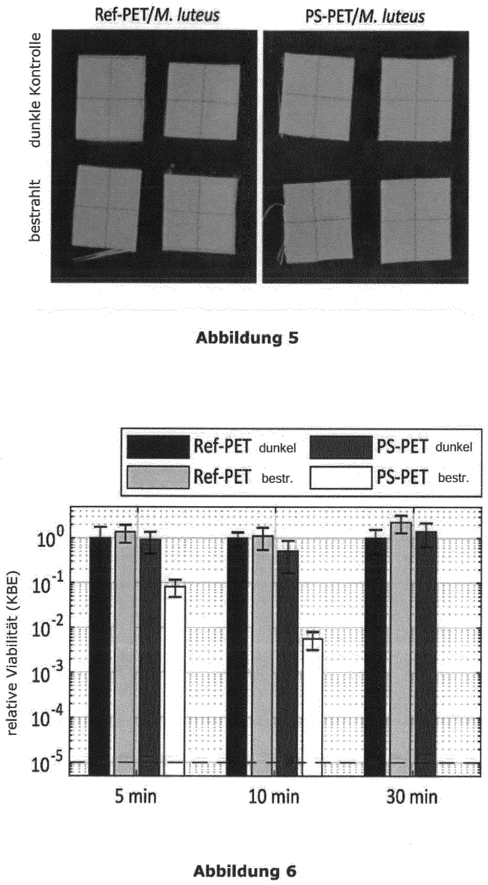

Abbildung 5 zeigt als einen Handversuch der Dunkel- und Phototoxizität exemplarische Fotos der mit *M. luteus* inkubierten Proben. Für die Bestimmung der Phototoxizität wurden je Probe, jeweils 4 Textil-Stücke mit 11 mW/cm² Weißlicht für 1 h bestrahlt. *M. luteus* ist ein gelber Keim und daher auf den ebenso gelben Textilproben schwer zu fotografieren. Die gelbe Farbe auf den Nullproben (ohne Keim weiß) stammt ausschließlich vom *M. luteus.*

Abbildung 6 veranschaulicht eine photodynamische Inaktivierung (PDI) von E. *coli* auf der Probe PS-PET sowie der Nullprobe (Ref-PET) als Referenz nach 5, 10 und 30 min. Die Bestrahlung mit Weißlicht erfolgte bei 11 ± 2 mW/cm². Die Fehlerbalken entsprechen der Standardabweichung aus 12 Zählungen (n=12). Das Zähllimit ist gestrichelt markiert. Die relative Rate ist auf die dunkel inkubierte Nullprobe normiert.

### DETAILLIERTE BESCHREIBUNG DER ERFINDUNG

In einem ersten Aspekt betrifft die vorliegende Erfindung ein textiles Flächengebilde *(textile fabric).*

Unter dem Begriff "textiles Flächengebilde" wird im Rahmen der vorliegenden Anmeldung ein zweidimensionales Textilerzeugnis verstanden, das insbesondere gewebt oder nicht-gewebt sein kann. Ein textiles Flächengebilde eignet sich insbesondere zur Fertigung von Bekleidung bzw. eines Kleidungsstücks daraus, kann aber ebenso zur Fertigung von Überzügen (zum Beispiel Überzüge für Möbel wie Sitzüberzüge in Flugzeugen, Zügen, Bussen oder Autos, Überzüge für Pakete), Vorhänge, Bettwäsche, Reinigungstücher, Putzlappen, Verpackungsmaterial etc. eingesetzt werden.

Das textile Flächengebilde weist ein Gewebe (also insbesondere ein gewebter Stoff) und/oder ein Vlies (also insbesondere ein nicht-gewebter Stoff) auf. Sowohl das Gewebe als auch das Vlies weisen Fasern auf, die im Fall eines Gewebes auch als Fäden *(thread)* bezeichnet werden. Insbesondere kann das Gewebe bzw. das Vlies im Wesentlichen aus Fasern zusammengesetzt sein. Während bei einem Gewebe die Fasern (bzw. Fäden) typischerweise regelmäßig angeordnet sind (zum Beispiel als Kettfäden und Schussfäden, die beispielsweise im Wesentlichen rechtwinklig zueinander angeordnet sein können), sind bei einem Vlies die Fasern meist unregelmäßig miteinander verschlungen (*intertwined*).

Gemäß einer beispielhaften Ausführungsform umfassen die Fasern Polyesterfasern, Cellulosefasern oder Kombinationen davon. Diese Faserarten erlauben eine besonders vorteilhafte Bindung eines Farbstoffs bzw. einer optionalen Beschichtung. Zudem sind Polyesterfasern auf Grund ihrer hohen Abriebbeständigkeit besonderes gut geeignet für Reinraumbekleidung und Cellulosefasern sind auf Grund ihres Tragekomforts und ihrer fehlenden Schmelzbarkeit besonderes gut geeignet für Schutzkleidung bzw. Arbeitskleidung einschließlich Kleidung im Labor, in der lebensmittelerzeugenden Industrie oder im klinischen Umfeld. Besonders geeignete Polyesterfasern beinhalten zum Beispiel Polyethylenterephthalat (PET)-Fasern. Besonders geeignete Cellulosefasern beinhalten zum Beispiel Baumwollfasern. Auch Kombinationen von Polyester- und Cellulosefasern haben sich als vorteilhaft erwiesen.

Die Fasern können zumindest teilweise eine Beschichtung aufweisen. Mit anderen Worten kann zumindest ein Teil der Fasern beschichtet sein. Die Beschichtung kann dazu dienen, dass daran (also an einer Oberfläche der Beschichtung) und/oder darin (zum Beispiel darin eingebettet) ein Photosensitizer, wie er nachstehend noch ausführlicher beschrieben wird, gebunden ist. Die Beschichtung kann somit insbesondere einen Binder bzw. einen Haftvermittler zwischen Faser und Photosensitizer darstellen. Zu diesem Zweck kann es vorteilhaft sein, wenn die Beschichtung ein Polymer umfasst, zum Beispiel ein (selbst)vernetztendes Polymer, das beispielsweise eine Polymermatrix bilden kann, in der der Photosensitizer eingebettet sein kann und/oder an deren Oberfläche der Photosensitizer gebunden (insbesondere adsorbiert) sein kann. Zum Beispiel kann das Polymer ein Melaminformaldehydharz sein.

Das textile Flächengebilde weist ferner einen Farbstoff auf, der durch Aktivierung mit elektromagnetischer Strahlung eine antimikrobielle Wirkung aufweist. Ein solcher Farbstoff wird im Rahmen der vorliegenden Anmeldung auch als ein "Photosensitizer" bezeichnet.

Unter einer "Aktivierung mit elektromagnetischer Strahlung" wird im Rahmen der vorliegenden Anmeldung insbesondere eine Bestrahlung mit sichtbaren Licht (z.B. mit einer Wellenlänge von 400 bis 800 nm, insbesondere von 400 bis 720 nm) und/oder mit Licht im UV-Bereich (z.B. mit einer Wellenlänge von 200 bis 400 nm, insbesondere von 320 bis 400 nm), verstanden. Vorzugsweise handelt es sich aber bei der elektromagnetischen Strahlung um Licht im sichtbaren Bereich, wie es zum Beispiel natürlich von der Sonne emittiert wird oder auch künstlich durch eine Lichtquelle erzeugt werden kann. Ohne an eine Theorie gebunden sein zu wollen, können bei einer solchen Aktivierung des Photosensitizers aus Sauerstoff (wie er beispielsweise in der Luft vorkommt) reaktive Sauerstoffspezies, insbesondere Singulettsauerstoff (¹O₂), gebildet werden, die eine (in der Regel unspezifische) antimikrobielle Wirkung ausüben.

Unter einer "antimikrobiellen Wirkung" wird im Rahmen der vorliegenden Anmeldung die Fähigkeit verstanden, Mikroorganismen, wie zum Beispiel Bakterien, Viren, Hefen und Pilze, abzutöten oder zumindest deren Wachstum zu kontrollieren bzw. zu beschränken. Gemäß einer beispielhaften Ausführungsform wird im Rahmen der vorliegenden Anmeldung unter einer "antimikrobiellen Wirkung" eine antibakterielle und/oder antivirale Wirkung oder Eigenschaft verstanden und kann insbesondere eine bakteriostatische, bakterizide, virostatische und/oder viruzide Wirkung oder Eigenschaft umfassen, einschließlich einer (bakteriostatischen und/oder bakteriziden) Wirkung gegenüber grampositiven sowie gramnegativen Bakterien bzw. einer (virostatischen und/oder viruziden) Wirkung gegenüber Coronaviren (Familie *Coronaviridae*), wie z.B. das *severe acute respiratory syndrome coronavirus 2* (SARS-CoV-2).

Gemäß einer beispielhaften Ausführungsform ist der Farbstoff (Photosensitizer) ausgewählt aus der Gruppe, bestehend aus einem Porphyrinfarbstoff, einem Xanthenfarbstoff und einem Phthalocyaninfarbstoff. Diese Stoffklassen haben sich als besonders geeignet für eine ausreichende Festigkeit bei der Bindung an das textile Substrat unter Beibehaltung ihrer photo-induzierten antimikrobiellen Wirksamkeit erwiesen. Wie von einem Fachmann verstanden wird, können in vorteilhafter Weise auch Kombinationen dieser Farbstoffklassen eingesetzt werden.

Gemäß einer beispielhaften Ausführungsform ist der Farbstoff (Photosensitizer) ausgewählt aus der Gruppe, bestehend aus TMPyP (α,β,γ,δ-Tetrakis(1-methylpyridinium-4-yl)porphyrin p-Toluensulfonat; CAS-Nummer 36951-72-1), Eosin Y (2',4',5',7'-Tetrabromfluorescein Dinatriumsalz; CAS-Nummer 17372-87-1), Rose Bengal (4,5,6,7-Tetrachlor-2',4',5',7'-tetraiodfluorescein Dinatriumsalz; CAS-Nummer 11121-48-5) und ZnPcF16 (Zink Perfluorphthalocyanin; CAS-Nummer 31396-84-6). Die Strukturformeln dieser besonders geeigneten Farbstoffe sind nachstehend wiedergegeben:

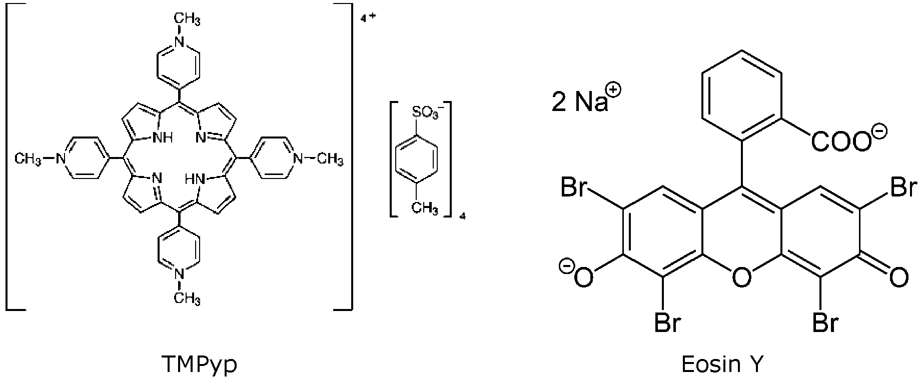

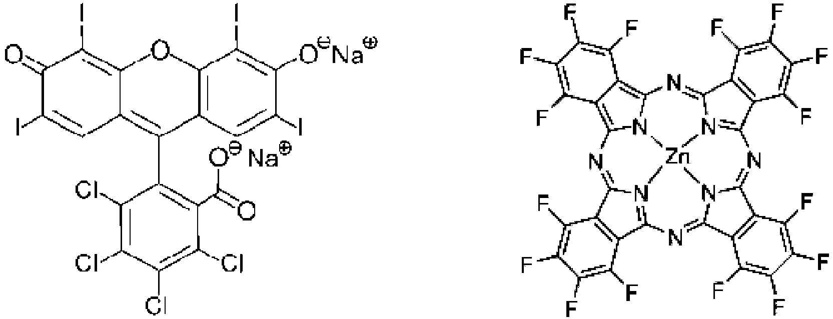

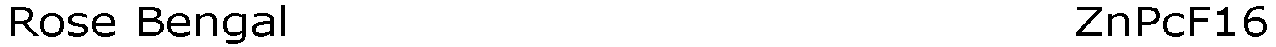

Von diesen haben sich insbesondere TMPyP und Eosin Y und davon vor allem TMPyP als besonders geeignete Farbstoffe/geeigneter Farbstoff für eine ausreichende Festigkeit bei der Bindung an das textile Substrat unter Beibehaltung ihrer/seiner photo-induzierten antimikrobiellen Wirksamkeit erwiesen. Selbstverständlich können in vorteilhafter Weise die genannten Farbstoffe auch in Kombination eingesetzt werden.

Der Farbstoff (Photosensitizer) ist an den Fasern bzw. an und/oder in der Beschichtung (insbesondere dauerhaft bzw. weitgehend irreversibel) gebunden. Vorzugsweise ist der Farbstoff an den Fasern bzw. an und/oder in der Beschichtung so fest gebunden, dass er nicht ohne weiteres (zum Beispiel beim Waschen des textilen Flächengebildes mit Wasser und wahlweise Waschmittel) herausgelöst werden kann und auch im gebundenen Zustand seine photo-induzierbare antimikrobielle Wirksamkeit im Wesentlichen beibehält.

Gemäß einer beispielhaften Ausführungsform ist der Farbstoff (Photosensitizer) an die Fasern (insbesondere an eine Oberfläche der Faser) bzw. an eine Oberfläche der Beschichtung adsorbiert und/oder in der Beschichtung eingebettet. Eine Adsorption des Photosensitizers an einer Oberfläche der Faser bzw. der Beschichtung mag insbesondere im Hinblick auf eine hohe antimikrobielle Wirksamkeit von Vorteil sein, da zum einen der Farbstoff weitestgehend ungehindert einer aktivierenden Strahlung ausgesetzt werden kann und zum anderen die durch die photosensibilisierte Aktivierung gebildeten reaktiven Sauerstoffspezies (wie Singulettsauerstoff) weitestgehend ungehindert zu ihrem gewünschten Wirkort (d.h. dem zu bekämpfenden Mikroorganismus) diffundieren kann. Andererseits mag eine Einbettung des Photosensitizers in der Beschichtung (zum Beispiel in einer Polymermatrix) insbesondere im Hinblick auf eine hohe Festigkeit bzw. Beständigkeit der Bindung von Vorteil sein und trotzdem noch eine gute antimikrobielle Wirksamkeit gewährleisten. Auch eine Kombination von Adsorption des Photosensitizers an einer Oberfläche und dessen Einbettung kann vorteilhaft sein.

Gemäß einer beispielhaften Ausführungsform ist der Farbstoff (Photosensitizer) über ionische Wechselwirkungen und/oder kovalent an die Fasern bzw. an die Beschichtung gebunden. Hierdurch kann eine besonders feste Bindung erreicht werden. In einer beispielhaften Ausführungsform kann der Farbstoff (Photosensitizer) aber auch molekular in der Beschichtung gelöst sein (d.h. der Farbstoff kann diffundieren bzw. migrieren, und ist chemisch nicht an die Beschichtung gebunden).

Gemäß einer beispielhaften Ausführungsform ist der Farbstoff (Photosensitizer) über ionische Wechselwirkungen an die Fasern bzw. an die Beschichtung gebunden. In einer Ausführungsform kann der Farbstoff hierzu funktionelle kationische Gruppen wie beispielsweise Ammoniumgruppen, quaternäre Ammoniumgruppen, protonierte Stickstoff-Heterocyclen (wie z.B. Pyridiniumgruppen), Phosphoniumgruppen oder quaternäre Phosphoniumgruppen enthalten. Diese kationischen Gruppen können mit anionischen Gruppen, die in der Beschichtung bzw. der Faser enthalten sind, wie zum Beispiel Carboxylatgruppen, Sulfonatgruppen, Sulfenatgruppen, Phosphonatgruppen, Phosphinatgruppen, wechselwirken, wobei eine ionische Bindung erzielt werden kann. In einer weiteren Ausführungsform kann der Farbstoff hierzu funktionelle anionische Gruppen wie beispielsweise Carboxylatgruppen, Sulfonatgruppen, Sulfenatgruppen, Phosphonatgruppen, Phosphinatgruppen usw. enthalten. Diese anionischen Gruppen können mit kationischen Gruppen, die in der Beschichtung bzw. der Faser enthalten sind, wie zum Beispiel Ammoniumgruppen, quaternäre Ammoniumgruppen, protonierte Stickstoff-Heterocyclen (wie z.B. Pyridiniumgruppen), Phoshoniumgruppen, quaternäre Phosphoniumgruppen, wechselwirken, wobei eine ionische Bindung erzielt werden kann.

Gemäß einer beispielhaften Ausführungsform hat es sich als vorteilhaft erwiesen, wenn die Fasern partiell negativ und der Farbstoff partiell positiv geladen ist oder wenn die Fasern partiell positiv und der Farbstoff partiell negativ geladen ist; mit anderen Worten wenn die Fasern und der Farbstoff gegensätzliche (und sich somit anziehende) Ladungen aufweisen.

Gemäß einer beispielhaften Ausführungsform ist der Farbstoff (Photosensitizer) kovalent an die Fasern bzw. an die Beschichtung gebunden. In einer Ausführungsform kann der Farbstoff hierzu kopplungsfähige Gruppen aufweisen, die mit entsprechenden kopplungsfähigen Gruppen der Beschichtung bzw. der Faser unter Bildung einer kovalenten Bindung reagieren können. Beispiele für geeignete reaktive kopplungsfähige Gruppen beinhalten Hydroxyl-, Hydroxyalkyl-, Amino-, Aminoalkyl-, Mercapto-, Mercaptoalkyl-, Epoxid-, Glycidyl-, Carboxyl-, Vinyl-, Allyl-, Acrylat-, Methacrylat-Gruppen, sowie Isocyanat- und Isothiocyanat-Gruppen. Diese Kopplungsreaktion kann - je nach der Beschaffenheit und Reaktivität der chemischen Gruppen - beispielsweise über Additionsreaktionen, Polymerisationsreaktionen oder Kondensationsreaktionen erfolgen und zur Ausbildung von beispielsweise Estergruppen, Amidgruppen, Ethergruppen, Sulfidgruppen, Urethangruppen, Harnstoffgruppen, Thioharnstoffgruppen, oder Verknüpfungen zwischen Kohlenstoffatomen führen.

Gemäß einer beispielhaften Ausführungsform ist der Farbstoff (Photosensitizer) direkt an die Faser bzw. an die Beschichtung gebunden ist, wie es vorstehend unter anderem veranschaulicht ist.

Gemäß einer weiteren beispielhaften Ausführungsform ist der Farbstoff (Photosensitizer) über eine Zwischengruppe (die auch als ein Spacer bzw. ein Linker bezeichnet werden kann) an die Faser bzw. an die Beschichtung gebunden. Dies kann insbesondere dann von Vorteil sein, falls der Farbstoff (bzw. dessen funktionellen Gruppen) eine geringe Affinität oder Bindungsneigung zu der Faser bzw. der Beschichtung aufweist. In diesem Fall kann die Zwischengruppe insbesondere als ein Linker bezeichnet werden. Es kann aber auch aus sterischen Gründen vorteilhaft sein, den Photosensitizer nicht direkt an die Faser bzw. die Beschichtung zu koppeln, sondern über eine Zwischengruppe. In einem solchen Fall kann die Zwischengruppe insbesondere als ein Spacer bzw. ein Abstandhalter bezeichnet werden. Selbstverständlich können auch mehrere (zum Beispiel verschiedene) Zwischengruppen zum Einsatz kommen, die parallel (nebeneinander) und/oder seriell (hintereinander, also über eine Kette von Zwischengruppen) angeordnet sein können.

In einem weiteren Aspekt betrifft die vorliegende Erfindung Bekleidung (zum Beispiel Textilien), die ein textiles Flächengebilde, wie es vorstehend beschrieben ist, aufweist, insbesondere daraus gemacht ist.

Gemäß einer beispielhaften Ausführungsform handelt es sich bei der Bekleidung um Schutzkleidung bzw. Arbeitskleidung (einschließlich Kleidung im Labor, in einer Klinik oder in der lebensmittelerzeugenden Industrie) und/oder Reinraumbekleidung. Unter "Schutzkleidung" wird im Rahmen der vorliegenden Anmeldung insbesondere jegliche Form von Bekleidung bzw. Kleidungsstücken verstanden, die den Träger (in der Regel ein Mensch) vor schädlichen Einflüssen schützen kann, insbesondere - aber nicht nur - vor schädlichen Einflüssen durch Mikroorganismen wie Bakterien und/oder Viren. Hierunter fällt insbesondere auch (Schutz-)Kleidung, die zur Verwendung in einem Labor in einer Klinik oder in der lebensmittelerzeugenden Industrie geeignet oder vorgesehen ist, einschließlich (Gesichts- bzw. Mund-Nase-) Masken, aber auch (Schutz-)Kleidung, die zum Tragen außerhalb von Gebäuden geeignet oder vorgesehen ist. Unter "Arbeitskleidung" wird im Rahmen der vorliegenden Anmeldung insbesondere jegliche Form von Bekleidung bzw. Kleidungsstücken verstanden, die im Allgemeinen zum Tragen beim (geistigen und/oder körperlichen) Arbeiten sowohl innerhalb als auch außerhalb von Gebäuden geeignet oder vorgesehen ist. Unter "Reinraumbekleidung" wird im Rahmen der vorliegenden Anmeldung insbesondere (Schutz-)Kleidung verstanden, die in einem Reinraum getragen wird und an die dementsprechend besonders hohe Anforderungen an die mikrobielle (und auch sonstige) Reinheit gestellt wird.

In einem weiteren Aspekt betrifft die vorliegende Erfindung ein Verfahren zur Herstellung bzw. Funktionalisierung eines textilen Flächengebildes (insbesondere zur Herstellung eines textilen Flächengebildes gemäß dem ersten Aspekt) bzw. eines Gewebes und/oder Vlieses, das Fasern aufweist. Sämtliche weitere Details zu dem textilen Flächengebilde, wie sie vorstehend beschrieben wurden, können auf das erfindungsgemäße Verfahren zutreffen.

Gemäß einer beispielhaften Ausführungsform können die Fasern zumindest teilweise beschichtet werden. Dies kann beispielsweise durch Applizieren einer Polymerzusammensetzung oder einer sonstigen für die Beschichtung geeigneten Zusammensetzung erfolgen. Ein Beschichten kann aber auch zusammen (d.h. in einem Verfahrensschritt) mit dem Applizieren des Farbstoffs (Photosensitizers) durchgeführt werden bzw. erfolgen.

Gemäß einer beispielhaften Ausführungsform beinhaltet das Applizieren des Farbstoffs ein Imprägnieren des textilen Flächengebildes mit einer den Farbstoff enthaltenden Zusammensetzung. Hierzu kann insbesondere ein Foulardverfahren (also ein Verfahren unter Verwendung eines Foulards) eingesetzt werden, wie es nachstehend zusammen mit weiteren Verfahrensschritten wie Binden und Nachbehandlung beispielhaft geschildert ist. Ein Foulard beinhaltet typischerweise ein System von zwei oder mehreren Walzen und einem Trog (auch als Chassis bezeichnet) zur Aufnahme einer Färbeflotte. Beim Foulardverfahren wird das Textilgut typischerweise im breiten Zustand in die Flotte eingetaucht und anschließend mittels Walzen der Überschuss an aufgenommener Flotte gleichmäßig über die gesamte Warenbreite entfernt. Zur Erstellung der Färbeflotte kann der Farbstoff mit einer Konzentration von beispielsweise 0,01 Gew.-% bis 1 Gew.-% in einem Bindersystem mit Vernetzer und optional weiteren Textilhilfsmitteln gelöst und in das Chassis eingefüllt werden. Das textile Flächengebilde wird in dem Chassis imprägniert und über die Foulardwalzen abgequetscht. Der Anteil, der nach dem Abquetschen auf dem Textil verbleibt, wird als Flottenaufnahme bezeichnet und beträgt vorzugsweise zwischen 50 % und 80 %. Anschließend kann das Textilmaterial getrocknet und kondensiert werden, zum Beispiel in einer Spann-Trocken- und Fixieranlage unter definierten Bedingungen bei einer Temperatur von 120°C bis 150°C. Zur Entfernung des nicht fixierten Farbstoffes und zur Verbesserung der Farbechtheiten erfolgt eine Nachbehandlung mit einem universellen Waschmittel bei einer Temperatur von 60 - 90°C und einer Verweilzeit zwischen 10 - 40 min, gefolgt von einem Trocknungsprozess.

Alternativ kann der Farbstoff auch in einem Ausziehverfahren appliziert werden, wie es nachstehend zusammen mit weiteren Verfahrensschritten wie Binden und Nachbehandlung beispielhaft geschildert ist. Bei einem Ausziehverfahren wird der Farbstoff typischerweise in der Färbeflotte gelöst und zieht durch die lange Behandlungszeit aus der Flotte aus und auf das Textilgut auf. Der Prozess umfasst typischerweise die Zufuhr des Farbstoffes zum Textilgut, seine Adsorption an der Faseroberfläche, eine Diffusion in die Faser und schließlich seine physikalische Bindung mit bzw. an der Faser. Die Färbung im Ausziehverfahren kann im breiten Zustand mit bewegter Flotte oder als Endlosstrang mit stehender Flotte mit einem Flottenverhältnis von 1:10 bis 1:80 erfolgen. Das Flottenverhältnis beschreibt das Verhältnis des Trockengewichtes des zu färbenden Materials zur im Färbeaggregat vorhandenen Färbeflotte. Zur Erstellung der Färbeflotte kann der Farbstoff mit einer Konzentration von beispielsweise 0,01 Gew.-% bis 1,5 Gew.-% in Wasser und optional weiteren Textilhilfsmitteln (Netz- und Egalisierhilfsmittel) gelöst und bei Raumtemperatur in das Färbeaggregat eingefüllt werden. Das Aufheizen der Färbeflotte erfolgt beispielsweise mit 0,5 - 3°C /min bis zu einer Temperatur zwischen 80 - 140°C. Die Färbung kann über eine Verweildauer von 45 min bis 60 min erfolgen. Überschüssiger und nicht fixierter Farbstoff kann mit warmen und kalten Spülprozessen entfernt werden. Zur Verbesserung der Farbechtheit kann auch eine reduktive Nachbehandlung unter Verwendung von Natronlauge, Hydrosulfit und einem farbstoffaffinen Waschmittel durchgeführt werden. Die Nachbehandlung erfolgt typischerweise bei einer Temperatur zwischen 60 - 90°C und einer Verweildauer zwischen 10 - 40 min und im Anschluss mehrere Spülprozesse, gefolgt von einem Trocknungsprozess.

Gemäß einer beispielhaften Ausführungsform weist das Binden des Farbstoffs ein Eingehen von ionischen Wechselwirkungen zwischen dem Farbstoff und den Fasern bzw. der Beschichtung auf. Hierzu können entsprechende funktionelle kationische bzw. anionische Gruppen des Farbstoffs und der Fasern bzw. der Beschichtung, wie sie oben ausführlich beschrieben sind, miteinander in Wechselwirkung treten, ohne dass es einer speziellen Reaktion oder sonstigen expliziten Zutuns bedarf.

Gemäß einer weiteren beispielhaften Ausführungsform weist das Binden des Farbstoffs eine chemische Reaktion unter Ausbildung einer kovalenten Bindung zwischen reaktiven Gruppen des Farbstoffs und reaktiven Gruppen der Fasern bzw. der Beschichtung auf. Eine solche Kopplungsreaktion kann - je nach der Beschaffenheit und Reaktivität der chemischen Gruppen, wie sie oben ausführlich beschrieben sind - beispielsweise über Additionsreaktionen, Polymerisationsreaktionen oder Kondensationsreaktionen erfolgen und zur Ausbildung von beispielsweise Estergruppen, Amidgruppen, Ethergruppen, Sulfidgruppen, Urethangruppen, Harnstoffgruppen, Thioharnstoffgruppen, oder Verknüpfungen zwischen Kohlenstoffatomen führen. Ebenso kann die Verwendung eines Katalysators vorgesehen werden, der die Kopplungsreaktion beschleunigt bzw. vereinfacht. Ferner kann auch die Verwendung eines Kopplungsreagens vorgesehen werden, um die Kopplung zu beschleunigen bzw. zu vereinfachen. Die Kopplungsreaktion kann bei unterschiedlicher Temperatur erfolgen, die bevorzugt im Temperaturbereich von 20°C bis 180°C liegen.

In einer beispielhaften Ausführungsform kann ein mit einer reaktiven chemischen Gruppe ausgerüsteter Farbstoff in einer Beschichtung gelöst und zur Reaktion gebracht werden, so dass der Farbstoff innerhalb der Beschichtung an diese bzw. Komponenten davon kovalent gebunden ist. Die Kopplungsreaktion kann vor dem Auftragen oder nach dem Auftragen einer Beschichtung auf ein Gewebe und/oder Vlies erfolgen, auch kann die Kopplungsreaktion während eines nachfolgenden Prozess-Schrittes wie einer Trocknung der Beschichtung, einer thermischen Härtung der Beschichtung oder einer thermischen Nachbehandlung erfolgen.

In einer anderen beispielhaften Ausführungsform kann der Farbstoff mit der Oberfläche der Faser bzw. der Beschichtung (einschließlich oberflächennahen Schichten davon) zur Reaktion gebracht werden, so dass der Farbstoff an die Oberfläche der Faser bzw. der Beschichtung gekoppelt ist. Bei dieser Ausführungsform wird die Kopplungsreaktion bevorzugt nach dem Auftrag einer Beschichtung auf ein Gewebe und/oder Vlies erfolgen, auch kann die Kopplungsreaktion während eines nachfolgenden Prozess-Schrittes wie einer Trocknung der Beschichtung, einer thermischen Härtung der Beschichtung oder einer thermischen Nachbehandlung bei erhöhter Temperatur erfolgen.

Gemäß einer weiteren beispielhaften Ausführungsform weist das Binden des Farbstoffs ein Einbetten des Farbstoffs in einer Polymermatrix der Beschichtung auf, zum Beispiel in einer sich aushärtenden Polymermatrix der Beschichtung. Hierbei kann es vorteilhaft sein, wenn das Beschichten und das Applizieren in einem Schritt durchgeführt wird. Des Weiteren kann es vorteilhaft sein, das Einbetten, insbesondere ein Aushärten der Polymermatrix, bei einer erhöhten Temperatur, zum Beispiel im Bereich von 80°C bis 180°C, insbesondere im Bereich von 120°C bis 150°C, durchzuführen.

Gemäß einer weiteren beispielhaften Ausführungsform umfasst das Verfahren ferner eine Nachbehandlung zur Entfernung von nicht-gebundenem Farbstoff. Eine solche Nachbehandlung kann insbesondere nach dem Schritt des Bindens des Farbstoffs durchgeführt werden. Hierzu kann beispielsweise das textile Flächengebilde mit einem Tensid (insbesondere einem anionischen oder nichtionischen Tensid) gewaschen bzw. gereinigt werden.

Gemäß einer beispielhaften Ausführungsform ist das textile Flächengebilde durch ein Verfahren, wie es vorstehend beschrieben wurde, erhältlich.

Die vorliegende Erfindung betrifft ferner die Verwendung eines an einem textilen Flächengebilde (bzw. an einem Gewebe und/oder Vlies) gebundenen Photosensitizers zur Kontrolle von mikrobiellem, insbesondere bakteriellem und/oder viralem, Wachstum bzw. die Verwendung eines an einem textilen Flächengebilde (bzw. an einem Gewebe und/oder Vlies) gebundenen Photosensitizers zur Verringerung einer mikrobiellen, insbesondere bakteriellen und/oder viralen, Belastung.

Gemäß einer beispielhaften Ausführungsform wird der Photosensitizer durch ein Verfahren wie es hierin beschrieben ist, an das textile Flächengebilde gebunden. Auch sämtliche weitere Details zu dem textilen Flächengebilde, wie sie vorstehend beschrieben wurden, können auf die erfindungsgemäße Verwendung zutreffen.

Gemäß einer beispielhaften Ausführungsform wird der Photosensitizer zur Deaktivierung von Bakterien und/oder Viren verwendet, insbesondere um mindestens log 3 (d.h. um mindestens 3 Zehnerpotenzen), vorzugsweise um mindestens log 4 (d.h. um mindestens 4 Zehnerpotenzen), insbesondere um mindestens log 5 (d.h. um mindestens 5 Zehnerpotenzen).

Gemäß einer beispielhaften Ausführungsform beinhalten die virale Belastung bzw. die Viren RNA-Viren, insbesondere Coronaviren.

Gemäß einer beispielhaften Ausführungsform beinhalten die virale Belastung bzw. die Viren das *severe acute respiratory syndrome coronavirus* 2 (SARS-CoV-2).

Die vorliegende Erfindung wird weiterhin an Hand der folgenden Beispiele beschrieben.

### Beispiele

### Funktionalisierung eines textilen Substrats

Als Photosensitizer (PS) wurde TMPyP (CAS 36951-72-1, Sigma Aldrich Co. LLC.) verwendet. Dabei handelt es sich um ein vierfach kationisches Porphyrin, das ein breites Wirkspektrum gegen grampositive und gramnegative Bakterien aufweist. Als textiles Material wurde ein kommerziell erhältliches Polyestersubstrat verwendet. Um eine Kopplung mit dem TMPyP zu begünstigen, wurde ein kationisch färbbares Gewebe gewählt.

Die Funktionalisierung erfolgte mittels Imprägnierung im Foulard-Verfahren bei einer TMPyP-Konzentration von ca. 0,1 wt.% in der Färbeflotte. Wahlweise wurde ein kommerzielles Bindersystem mit Vernetzer der Sera-Familie von DyStar (DyStar Colours Distribution GmbH) verwendet. Dieser Binder liegt in nichtionogener synthetischer Polymerdispersion vor. Bei der Foulardierung wird der im Bindersystem adsorbierte Farbstoff, also eingebettet in einer Art Polymermatrix, mittels Walzen in das Textilsubstrat gequetscht. Optional wurden die Proben nach der Färbung einer Nachbehandlung unterzogen, die schlecht gebundene TMPyP-Moleküle entfernen und damit die Waschechtheit erhöhen sollte. Dafür wurden die Proben mit anionischen Tensiden und nichtionogenem Waschmittel nachgereinigt.

### Untersuchte Proben

Es wurden drei unterschiedliche Probensätze funktionalisiert und miteinander verglichen. Die im Folgenden verwendeten Bezeichnungen der untersuchten Proben lauten:

| | |
|---|---|
| Ref-PET | unbearbeitetes Referenzsubstrat |
| PS-PET | funktionalisiert mit Binder und Nachbehandlung |
| PS-PET* | funktionalisiert mit Binder ohne Nachbehandlung |
| PS-PET** | funktionalisiert ohne Binder ohne Nachbehandlung |

### Beurteilung der Probenfärbung

Die Färbung wurde mittels visueller Begutachtung, diffuser Reflexions-Spektroskopie im UV-VIS (DRUV) und ortsaufgelösten Fluoreszenzscans überprüft. Zusätzlich wurden die Proben in H₂O, PBS, EtOH und Bakteriensuspension gespült, um sicherzustellen, dass kein PS während der PDI extrahiert wird und die Wirkung des funktionalisierten Gewebes verfälscht. DRUV-Spektren der funktionalisierten Proben wurden mit einem Absorptionsspektrometer (UV-2450, Shimadzu Deutschland GmbH) mit Ulbricht-Kugel-Aufsatz (ISR-240A, ebenfalls Shimadzu) aufgenommen. Als Standard wurde nicht funktionalisiertes PET⁺-Gewebe verwendet. Für die Darstellung der Spektren wird die Kubelka-Munk-Funktion F(R) verwendet.

### Zeit-aufgelöstes NIR-Lumineszenz-Scannen

Oberflächenmessungen der zeitaufgelösten NIR-Lumineszenz erfolgte durch ein TCMPC-System (SHB-analytics) und einen NIR-optimierten PMT-Detektor (Hamamatsu). Die Kanalbreite der TCMPC beträgt 80 ns bei einer Gesamtzahl von 4096 Kanälen. Die Pulsbreite des Anregungspulses beträgt 240 ns, daraus ergibt sich eine Anregungsenergie von ca. 0,3 µJ/Puls. Für die hier durchgeführten Messungen wurden zwei Detektionsoptiken verwendet. Eine Optik bei 1270 ± 20 nm (FWHM resp. full width at half maximum), die für den Spektralen Bereich der 1O2-Lumineszenz optimiert ist, und eine Optik bei 1200 ± 15 nm (FWHM). Die dargestellten ¹O₂-Signale werden schließlich anhand der Referenzmessungen bei 1200 ± 15 nm (FWHM) untergrundkorrigiert.

### Phototoxische Experimente

Für PDI-Versuche mit Mikroorganismen wurden die Proben in vier Gruppen eingeteilt: (1.) Bestrahlte PS-dotierte Proben unter definierten Bestrahlungsbedingungen, (2.) gleichbehandelte aber unbestrahlte Dunkelkontrollen sowie (3.) bestrahlte und (4.) unbestrahlte Nullproben (Ref-PET). Die Versuche wurden entweder semiquantitativ mit dem grampositiven Luftkeim *Micrococcus luteus* (*M. luteus*) durch visuelle Einschätzung der Bakterienkolonisation oder quantitativ mit einem Wildtyp des gramnegativen *Escherichia coli* (*E. coli*) mittels eines Plattenauszählverfahrens durchgeführt. Alle Phototoxizitätsversuche wurden an mit 70-prozentigem EtOH desinfizierten Proben unter sterilen Bedingungen durchgeführt und mindestens dreimal wiederholt. Die Bestrahlung der Proben erfolgte mit einer Weißlicht-Bestrahlungsanlage (Emission zwischen 400 und 800m) bei 11 ± 2 mW/cm² für maximal eine Stunde.

### Ergebnisse

Im Folgenden wird das im Imprägnierverfahren mit Binder funktionalisierte und nachbehandelte Textilgewebe (PS-PET) hinsichtlich seiner PS-Dotierung und PS-Bindungsstabilität charakterisiert und mit zwei nicht nachbehandelten mit und ohne Binder gefärbten Proben verglichen (PS-PET* und PS-PET**). Anschließend wird die Probe PS-PET hinsichtlich ihrer ¹O₂-Generierung untersucht und ihre antimikrobielle Wirkung quantifiziert.

### Immobilisierung von TMPyp

Die mit Binder funktionalisierte und nachbehandelte Probe PS-PET zeigt eine deutliche und homogene TMPyP-Färbung auf. Durch die Nachbehandlung zur Erhöhung der Waschechtheit wird nur wenig PS entfernt und die Probe erscheint etwas blasser, wie der Vergleich mit zwei nicht nachbehandelten mit (PS-PET*) und ohne (PS-PET**) Bindersystem gefärbten Proben zeigt (siehe **Abbildung 1****).** Bei der Färbung selbst zeigt die Verwendung des Bindersystems noch keinen Vorteil.

Wie in **Abbildung 2** dargestellt, wird der relative Farbeindruck durch die DRUV-Spektren bestätigt. Dabei ist bei allen drei Proben das charakteristische TMPyP-Absorptionsspektrum erkennbar. Gegenüber TMPyP in wässeriger Lösung weisen die Reflexionsspektren einen bathochromen Effekt von ca. 10 nm auf. Dieser kann auf die veränderte Mikroumgebung des PS zurückgeführt werden. Der hypochrome Effekt und die Verbreiterung der Soret-Banden sind ebenfalls auf die Adsorption des TMPyP an die Textilfasern zurückzuführen.

Extraktionsversuche zur Validierung der PS-Immobilisierung wurden in H₂O, PBS, EtOH und E. coli Bakteriensuspension durchgeführt und mit den Proben PS-PET* (keine Nachbehandlung) und PS-PET** (keine Nachbehandlung und kein Bindersystem) verglichen. Dabei konnte kein Bluten des TMPyP der Probe PS-PET festgestellt werden. Für die nicht-nachbehandelten mit und ohne Bindersystem funktionalisierten Gewebe ist das nicht der Fall. In **Abbildung 3** ist deren TMPyP-Extraktion am Beispiel von EtOH dargestellt, dass das größte Bluten aufwies. Dabei ist der PS auf der Probe ohne Bindersystem am schlechtesten immobilisiert. Die im Bindersystem gefärbte und nachbehandelte Probe zeigt innerhalb der Messempfindlichkeit keine PS-Extraktion.

### Charakteristika der ¹O₂-Erzeugung

Scans der NIR-Lumineszenz auf der Probenoberfläche zeigen deutliche ¹O₂-Signale mit charakteristischem An- und Abklingen der Kinetik (siehe **Abbildung 4****).** Kontrollmessungen bei 1200 ± 15 nm (FWHM) wiesen vernachlässigbare PS-Phosphoreszenzsignale auf, so dass eine Sauerstoffverarmung ausgeschlossen werden konnte. Trotzdem werden die Signale sowohl im Trocken- als auch Nasszustand von sehr langen Abklingzeiten oberhalb von 50 µs dominiert. Dafür können das ¹O₂-Abklingen an Luft als auch ein möglicher diffusionsbegrenzter Sauerstofftransport im PET-Substrat verantwortlich gemacht werden. Durch die normierte Darstellung (rechts in Abbildung 4 wiedergegeben) wird deutlich, dass die ¹O₂-Kinetik von der wässerigen Mikroumgebung der im Nasszustand gescannten Proben beeinflusst wird. Sowohl An- als auch Abklingen sind deutlich kürzer als bei einer trocken gescannten Probe. Damit kann davon ausgegangen werden, dass der generierte ¹O₂ das Substrat verlassen kann und für eine PDI von Mikroorganismen zur Verfügung steht.

### Antimikrobielle Aktivität bei Bestrahlung mit weißem Licht

Im Handversuch mit dem gelben Luftkeim *M. luteus* zeigt die Probe eine vollständige Keimabtötung nach einstündiger Bestrahlung mit Weißlicht (siehe **Abbildung 5****).** Sowohl die (ursprünglich weißen) bestrahlten und unbestrahlten Nullproben als auch die unbestrahlten PS-PET Proben sind vollständig mit einem gelben Film des *M. luteus* überzogen. Auf den bestrahlten PS-PET Proben konnten keine Bakterien identifiziert werden.

Die quantitative Auswertung der PDI gegen den *E. coli* zeigt ebenfalls eine im Rahmen des Versuches vollständige lichtinduzierte Keimabtötung nach 30 Minuten (siehe **Abbildung 6****).** Bereits nach zehnminütiger Bestrahlung beträgt die Phototoxizität ca. zwei Log10-Stufen, nach 30 Minuten mindestens fünf Log-Stufen. Es konnte kein Dunkeltoxischer Effekt beobachtet werden. Damit kann diese Probe nach einer zehn- bis 30-minütigen Weißlichtbestrahlung mit nur 11 ± 2 mW/cm² als antimikrobiell eingestuft werden.

### Schlussfolgerungen

Die Imprägnierung des kommerziellen PET-Gewebes im Foulardverfahren mit TMPyP führt zu einer homogenen Einfärbung des Textils. Durch die Nachbehandlung wird schlecht gebundener PS ausgewaschen und die Waschbeständigkeit erhöht. Im Resultat konnte innerhalb der durchgeführten Extraktionsversuche mit H₂O, PBS, EtOH und Bakteriensuspension mit *E. coli* kein PS-Bluten beobachtet werden. Das ist besonders kritisch, da das kationische TMPyP eine hohe Affinität zu gramnegativen Zellwänden hat. Die spektroskopische Charakterisierung der PS-PET-Gewebe zeigt, dass die photophysikalische Aktivität des TMPyP nach der Funktionalisierung erhalten bleibt. Das TMPyP auf dem Gewebe ist in der Lage ¹O₂ zu generieren. Zeitaufgelöste ¹O₂-Scans bei veränderter Mikroumgebung (trockenen und nasse Proben) beweisen, dass der generierte ¹O₂ das Gewebe verlassen kann. Das mit TMPyP funktionalisierte Gewebe ist über PDI zur vollständigen Keimabtötung eines grampositiven Luftkeims und des gramnegativen Modellbakteriums *E. coli.* in der Lage. Eine Quantifizierung der Phototoxizität zeigt eine Zellinaktivierung von mindestens fünf Log-Stufen nach nur 30-minütiger Bestrahlung mit Weißlicht.

## Patentansprüche

1. Textiles Flächengebilde, aufweisend ein Gewebe und/oder ein Vlies,
wobei das Gewebe und/oder Vlies Fasern aufweist, die optional zumindest teilweise eine Beschichtung aufweisen,
wobei ein Farbstoff, der durch Aktivierung mit elektromagnetischer Strahlung eine antimikrobielle Wirkung aufweist, an den Fasern bzw. an und/oder in der Beschichtung gebunden ist;
**dadurch gekennzeichnet, dass** der Farbstoff TMPyP ist.

2. Textiles Flächengebilde nach Anspruch 1, wobei der Farbstoff an die Fasern bzw. an eine Oberfläche der Beschichtung adsorbiert und/oder darin eingebettet ist.

3. Textiles Flächengebilde nach Anspruch 1 oder 2, wobei der Farbstoff über ionische Wechselwirkungen und/oder kovalent an die Fasern bzw. an die Beschichtung gebunden ist.

4. Textiles Flächengebilde nach einem der vorherigen Ansprüche, wobei die Fasern partiell negativ und der Farbstoff partiell positiv geladen ist oder wobei die Fasern partiell positiv und der Farbstoff partiell negativ geladen ist.

5. Textiles Flächengebilde nach einem der vorherigen Ansprüche, wobei die Fasern Polyesterfasern und/oder Cellulosefasern umfassen.

6. Bekleidung, aufweisend ein textiles Flächengebilde nach einem der vorherigen Ansprüche.

7. Bekleidung nach Anspruch 6, wobei die Bekleidung Schutzkleidung, Arbeitskleidung und/oder Reinraumbekleidung ist.

8. Verfahren zur Funktionalisierung eines textilen Flächengebildes, aufweisend ein Gewebe und/oder ein Vlies, das Fasern aufweist, wobei das Verfahren folgende Schritte umfasst:
optionales zumindest teilweises Beschichten der Fasern;
Applizieren eines Farbstoffs, der durch Aktivierung mit elektromagnetischer Strahlung eine antimikrobielle Wirkung aufweist, auf das textile Flächengebilde;
Binden des Farbstoffs an den Fasern bzw. an und/oder in der Beschichtung;
**dadurch gekennzeichnet, dass** der Farbstoff TMPyP ist.

9. Verfahren nach Anspruch 8, wobei das Applizieren des Farbstoffs ein Imprägnieren des textilen Flächengebildes mit einer den Farbstoff enthaltenden Zusammensetzung beinhaltet.

10. Verfahren nach Anspruch 8 oder 9, wobei das Binden des Farbstoffs mindestens eines der folgenden Merkmale aufweist:
- ein Eingehen von ionischen Wechselwirkungen zwischen dem Farbstoff und den Fasern bzw. der Beschichtung;
- eine chemische Reaktion unter Ausbildung einer kovalenten Bindung zwischen reaktiven Gruppen des Farbstoffs und reaktiven Gruppen der Fasern bzw. der Beschichtung;
- ein Einbetten des Farbstoffs in einer Polymermatrix der Beschichtung.

11. Verfahren nach einem der Ansprüche 8 bis 10, wobei das Verfahren ferner eine Nachbehandlung zur Entfernung von nicht-gebundenem Farbstoff umfasst.

12. Verwendung eines an einem textilen Flächengebilde gebundenen Photosensitizers, der TMPyP ist, zur Kontrolle von mikrobiellem, insbesondere bakteriellem und/oder viralem, Wachstum.

13. Verwendung eines an einem textilen Flächengebilde gebundenen Photosensitizers, der TMPyP ist, zur Verringerung einer mikrobiellen, insbesondere bakteriellen und/oder viralen, Belastung.

## Claims

1. A textile fabric, comprising a woven fabric and/or a nonwoven fabric,
wherein the woven fabric and/or nonwoven fabric comprises fibers which optionally at least partially comprise a coating,
wherein a dye which has an antimicrobial effect by activation with electromagnetic radiation is bound to the fibers or to and/or in the coating;
**characterized in that** the dye is TMPyP.

2. The textile fabric according to claim 1, wherein the dye is adsorbed to the fibers or to a surface of the coating and/or is embedded therein.

3. The textile fabric according to claim 1 or 2, wherein the dye is bound to the fibers or to the coating via ionic interactions and/or covalently.

4. The textile fabric according to one of the preceding claims, wherein the fibers are partially negatively charged and the dye is partially positively charged or wherein the fibers are partially positively charged and the dye is partially negatively charged.

5. The textile fabric according to one of the preceding claims, wherein the fibers encompass polyester fibers and/or cellulose fibers.

6. Clothing, comprising a textile fabric according to one of the preceding claims.

7. The clothing according to claim 6, wherein the clothing is protective clothing, work clothing and/or clean room clothing.

8. A method for functionalizing a textile fabric, comprising a woven fabric and/or a nonwoven fabric, which comprises fibers, wherein the method encompasses the following steps:
optionally at least partially coating the fibers;
applying a dye which has an antimicrobial effect by activation with electromagnetic radiation to the textile fabric;
binding the dye to the fibers or to and/or in the coating;
**characterized in that** the dye is TMPyP.

9. The method according to claim 8, wherein the application of the dye includes impregnation of the textile fabric with a composition containing the dye.

10. The method according to claim 8 or 9, wherein the binding of the dye comprises at least one of the following features:
- entering into ionic interactions between the dye and the fibers and/or the coating;
- a chemical reaction with formation of a covalent bond between reactive groups of the dye and reactive groups of the fibers and/or the coating;
- embedding the dye in a polymer matrix of the coating.

11. The method according to one of claims 8 to 10, wherein the method further encompasses a post-treatment for removing unbound dye.

12. The use of a photosensitizer bound to a textile fabric, which is TMPyP, for controlling microbial, in particular bacterial and/or viral, growth.

13. The use of a photosensitizer bound to a textile fabric, which is TMPyP, for reducing microbial, in particular bacterial and/or viral, stress.

## Revendications

1. Structure textile plate, présentant un tissu et/ou un non-tissé,
dans laquelle le tissu et/ou le non-tissé contient des fibres qui présentent facultativement au moins partiellement un revêtement,
dans laquelle un colorant, qui présente une activité antimicrobienne par activation par rayonnement électromagnétique, est lié aux fibres ou au revêtement et/ou dans celui-ci ;
**caractérisée en ce que** le colorant est du TMPyP.

2. Structure textile plate selon la revendication 1, dans laquelle le colorant est adsorbé au niveau des fibres ou d'une surface du revêtement et/ou y est incorporé.

3. Structure textile plate selon la revendication 1 ou 2, dans laquelle le colorant est lié de manière covalente et/ou par des interactions ioniques aux fibres ou au revêtement.

4. Structure textile plate selon l'une quelconque des revendications précédentes, dans lequel les fibres sont partiellement chargées négativement et le colorant est partiellement chargé positivement, ou dans laquelle les fibres sont partiellement chargées positivement et le colorant est partiellement chargé négativement.

5. Structure textile plate selon l'une quelconque des revendications précédentes, dans laquelle les fibres comprennent des fibres de polyester et/ou des fibres de cellulose.

6. Vêtement présentant une structure textile plate selon l'une quelconque des revendications précédentes.

7. Vêtement selon la revendication 6, dans lequel le vêtement est un vêtement de protection, un vêtement de travail et/ou un vêtement pour salle blanche.

8. Procédé de fonctionnalisation d'une structure textile plate présentant un tissu et/ou un non-tissé contenant des fibres, dans lequel le procédé comprend les étapes suivantes consistant à :
revêtir facultativement les fibres au moins partiellement ;
appliquer un colorant qui présente une activité antimicrobienne par activation par rayonnement électromagnétique sur la structure textile ;
lier le colorant aux fibres ou au revêtement et/ou dans celui-ci ;
**caractérisé en ce que** le colorant est du TMPyP.

9. Procédé selon la revendication 8, dans lequel l'application du colorant comprend l'imprégnation de la structure textile plate avec une composition contenant le colorant.

10. Procédé selon la revendication 8 ou 9, dans lequel la liaison du colorant présente au moins une des caractéristiques suivantes :
- des interactions ioniques entre le colorant et les fibres ou le revêtement ;
- une réaction chimique avec formation d'une liaison covalente entre des groupes réactifs du colorant et des groupes réactifs des fibres ou du revêtement ;
- une intégration du colorant dans une matrice polymère du revêtement.

11. Procédé selon l'une quelconque des revendications 8 à 10, dans lequel le procédé comprend en outre un post-traitement pour éliminer le colorant non lié.

12. Utilisation d'un photosensibilisateur lié à une structure textile plate, qui est le TMPyP, pour commander une croissance microbienne, en particulier bactérienne et/ou virale.

13. Utilisation d'un photosensibilisateur lié à une structure textile plate, qui est le TMPyP, pour réduire une charge microbienne, en particulier bactérienne et/ou virale.
